# EUROPÄISCHE PATENTSCHRIFT

(11) **EP 2 448 847 B1**
(45) Veröffentlichungstag und Bekanntmachung des Hinweises auf die Patenterteilung: **01.05.2013**
(21) Anmeldenummer: 10718155.4
(22) Anmeldetag: 03.05.2010
(51) Int. Cl.: B65G 47/51, B65G 47/84, B65G 47/90

(54) **VORRICHTUNG ZUM HANDHABEN VON OBJEKTEN**
MACHINE FOR HANDLING ARTICLES
MACHINE POUR TRAITER DES OBJETS

(30) Priorität: 03.07.2009 DE 102009027462
(43) Veröffentlichungstag der Anmeldung: 09.05.2012
(73) Patentinhaber: Robert Bosch GmbH, 70442 Stuttgart (DE)
(72) Erfinder: KRAUSS, Ulrich, 74532 Ilshofen (DE); HUMPFER, Steffen, 74589 Satteldorf (DE)
(86) Internationale Anmeldenummer: PCT/EP2010/055946
(87) Internationale Veröffentlichungsnummer: WO 2011/000603

(56) Entgegenhaltungen:
- EP-A1- 0 860 385
- EP-A2- 0 191 158
- US-A- 4 164 997
- US-A- 4 469 217

## Beschreibung

### Stand der Technik

Die Erfindung betrifft eine Vorrichtung zum Handhaben von Objekten nach dem Oberbegriff des Anspruchs 1.

Eine derartige Vorrichtung ist bereits allgemein bekannt und wird in der Verpackungsindustrie insbesondere zum Zuführen von pharmazeutischen Behältnissen wie Vials, Ampullen oder ähnlichem zu einer Verschließstation eingesetzt. Bekannt sind Vorrichtungen, die einen Zuführstern aufweisen, der über eine Transportschnecke mit den Vials bzw. Behältnissen beschickt wird. Ferner sind Lösungen bekannt, bei der als Ampullen ausgebildete Behältnisse über eine Vereinzelungseinrichtung einem Transportband übergeben werden, welches die Behältnisse zu den einzelnen Bearbeitungsstationen zuführt.

### Offenbarung der Erfindung

Ausgehend vom dargestellten Stand der Technik liegt der Erfindung die Aufgabe zugrunde, eine Vorrichtung zum Handhaben von Objekten nach dem Oberbegriff des Anspruchs 1 derart weiterzubilden, dass dieses flexibel an unterschiedliche Bedürfnisse anpassbar ist, sowie einen relativ kleinen Bauraum aufweist. Ferner ist es erwünscht, dass sich jeweils nur eine relativ geringe Anzahl von Objekten im Bereich der jeweiligen Bearbeitungsstation befindet. Diese Aufgabe wird bei einer Vorrichtung zum Handhaben von Objekten mit den Merkmalen des Anspruchs 1 gelöst.

Vorteilhafte Weiterbildungen der erfindungsgemäßen Vorrichtung zum Handhaben von Objekten sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Ein besonders kompakter Aufbau der Vorrichtung bei gleichzeitig hoher Flexibilität bezüglich der Arbeits- bzw. Funktionsweise der jeweiligen Bearbeitungsstationen wird ermöglicht, wenn die Überführeinrichtung als Transportrad ausgebildet ist, das mehrere, kreissegmentartige Trägerelemente aufweist, die um eine Längsachse des Transportrades bewegbar sind und, dass die Gesamtheit der Trägerelemente nur einen Teilbereich am Umfang des Transportrades umfasst, so dass zwischen den einzelnen Trägerelementen zumindest zeitweise Zwischenräume ausgebildet sind.

Eine besonders gute Anpassung an die verschiedenen Bearbeitungsstationen, so dass diese möglichst effektiv arbeiten können, wird ermöglicht, wenn die Trägerelemente kontinuierlich und taktweise bewegbar sind.

In einer vorteilhaften Weiterbildung ist es vorgesehen, dass die Handhabungseinrichtung als Handhabungsroboter ausgebildet ist, an dem der Objektträger austauschbar befestigt ist und, dass der Teilungsabstand zwischen den Objekten im Objektträger dem Teilungsabstand der Objekte in dem Trägerelement entspricht. Dadurch wird bei der Übergabe der Objekte an die Überführeinrichtung bzw. aus dieser heraus ein einfacher Bewegungsablauf der Handhabungseinrichtung erzielt, wobei durch die Ausbildung als Handhabungsroboter die Handhabungseinrichtung sehr flexibel an unterschiedliche räumliche Verhältnisse zwischen der Vorrichtung zum Handhaben der Objekte und einem Bereitstellungsraum, in der die Objekte von dem Handhabungsroboter übernommen werden, angepasst werden kann.

Besonders vorteilhaft zur reibungslosen Übernahme bzw. Übergabe der Objekte ist es hierbei, wenn die Objekte im Objektträger in einer geraden Reihe angeordnet sind und, dass der Objektträger und das Trägerelement während der Übergabe der Objekte an das Trägerelement bzw. der Übernahme aus dem Trägerelement tangential mit derselben Geschwindigkeit aneinander vorbei bewegt werden.

In einer alternativen Ausführungsform ist es vorgesehen, dass die Handhabungseinrichtung als Handhabungsroboter ausgebildet ist, an dem der Objektträger austauschbar befestigt ist und, dass der Teilungsabstand zwischen den Objekten im Objektträger und der Teilungsabstand der Objekte in dem Trägerelement unterschiedlich ist. Dadurch ist es auch möglich, die Objekte an einem Bereitstellungsraum durch die Handhabungseinrichtung zu übernehmen, an denen die Objekte in ihrer Trägerplatte in einem anderen Abstand zueinander angeordnet sind wie in dem Trägerelement.

Um eine reibungslose Übergabe der Objekte an die Überführeinrichtung zu ermöglichen, ist es dabei insbesondere vorgesehen, dass die Objekte im Objektträger in einer geraden Reihe angeordnet sind und, dass der Objektträger und das Trägerelement während der Übergabe der Objekte an das Trägerelement bzw. der Übernahme aus dem Trägerelement tangential aneinander vorbei bewegt werden, wobei die Geschwindigkeit des Objektträgers von der Geschwindigkeit des Trägerelements während der Übergabe und der Übernahme zeitweise unterschiedlich ist.

Ein besonders kompakter Aufbau der erfindungsgemäßen Vorrichtung wird darüber hinaus ermöglicht, wenn die Übergabe der Objekte in das Trägerelement und die Übernahme der Objekte aus dem Trägerelement am selben Ort der Vorrichtung erfolgt.

Eine besonders sichere Handhabung ohne zusätzliche Übergabeeinrichtungen wird ermöglicht, wenn die Objekte zwischen der Übernahme aus der Handhabungseinrichtung und der Übergabe aus der Überführeinrichtung stets in den Trägerelementen angeordnet sind.

Vorzugsweise wird die Vorrichtung für Objekte eingesetzt, die als mit einem pharmazeutischen Produkt befüllbare Vials oder Zylinderampullen ausgebildet sind, wobei wenigstens eine Bearbeitungsstation zumindest eine Verschließstation zum Verschließen der Objekte mit einem Verschlusselement, insbesondere eine Bördelkappe umfasst.

Weitere Vorteile, Merkmale und Einzelheiten der Erfindung ergeben sich aus der nachfolgenden Beschreibung bevorzugter Ausführungsbeispiele sowie anhand der Zeichnungen.

### Diese zeigt

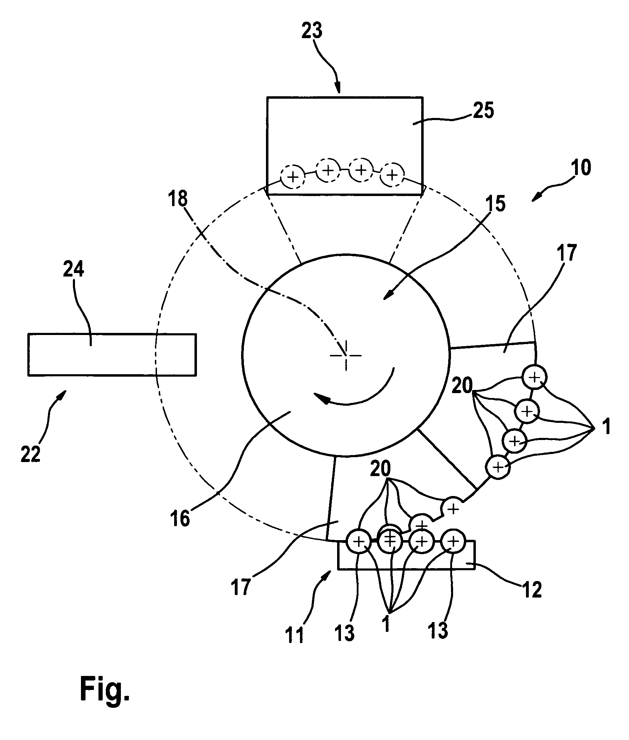

in der einzigen Figur eine erfindungsgemäße Vorrichtung zum Handhaben von pharmazeutischen Objekten in einer vereinfachten Draufsicht.

In der Figur ist eine Vorrichtung 10 zum Handhaben von Objekten 1 dargestellt. Bei den Objekten 1 handelt es sich insbesondere um pharmazeutische Behältnisse wie Vials, Zylinderampullen oder ähnlichem, welche zuvor mit einem pharmazeutischen Produkt befüllt und anschließend mit einem nicht dargestellten Verschlusselement, insbesondere in Form einer Bördelkappe verschlossen werden müssen. Die Vorrichtung 10 dient hierbei der Zuführung der Objekte 1 zu den verschiedenen Bearbeitungsstationen.

Die Vorrichtung 10 umfasst einen Handhabungsroboter 11 mit einem als Formatteil ausgebildeten Objektträger 12. Der Objektträger 12 ist geradlinig ausgebildet und weist im Ausführungsbeispiel vier Aufnahmen 13 für die Objekte 1 auf, die in jeweils gleichem Abstand zueinander in gerader Linie angeordnet sind. Mittels eines nicht dargestellten Arms des Handhabungsroboters 11, an dem der Objektträger 12 austauschbar befestigt ist, lässt sich der Objektträger 12 zwischen einem Bereitstellungsraum, an der dieser die Objekte 1 aus einer Trägerplatte entnimmt und der in der Figur dargestellten Übergabeposition, an der die Objekte 1 mittels des Handhabungsroboters 11 an eine Überführeinrichtung 15 übergeben werden, bewegen.

Die Überführeinrichtung 15 weist ein kreisförmiges Transportrad 16 auf. Am Außenumfang des Transportrades 16 sind mehrere, beispielsweise zwei Trägerplatten 17 angeordnet, die in dem Transportrad 16 gelagert sind und die um eine Längsachse 18 des Transportrades 16 beispielsweise im Uhrzeigersinn bewegbar sind. Hierzu ist beispielsweise am Transportrad 16 eine nicht dargestellte, umlaufende Außenverzahnung ausgebildet, die mit einem an der Trägerplatte 17 angeordneten, ebenfalls nicht dargestellten Zahnrad kämmt. Das Zahnrad ist mit einem Antrieb gekoppelt, so dass sich alle Trägerplatten 17 individuell am Transportrad 16 bewegen lassen.

Am Außenumfang der kreissegmentartigen Trägerplatte 17 sind im Ausführungsbeispiel ebenfalls vier Aufnahmen 20 für die Objekte 1 angeordnet, deren Teilungsabstand dem Teilungsabstand der Objekte 1 in dem Objektträger 12 entspricht. In der in der Figur dargestellten Position des Objektträgers 12 werden die Objekte 1 von dem Objektträger 12 in die Aufnahmen 20 der Trägerplatte 17 übergeben. Hierbei führt die Trägerplatte 17 eine lineare, d.h. geradlinige Bewegung tangential entlang des Bewegungsweges des Objektträgers 12 aus, wobei die einzelnen Objekte 1 nach und nach in die Trägerplatte 17 übergeben werden. Entlang des weiteren Bewegungsweges der Trägerplatte 17 im Uhrzeigersinn sind beispielhaft zwei weitere Bearbeitungsstationen 22 und 23 angeordnet. Die erste Bearbeitungsstation 22 ist als eine Kappenübergabeeinrichtung 24 ausgebildet. In der Kappenübergabeeinrichtung 24 wird jeweils eine beispielsweise aus Aluminium bestehende Bördelkappe bzw. ein aus Aluminium bestehendes Verschlusselement auf das zuvor befüllte Objekt 1 aufgesetzt. Dies kann mittels Rutschen bzw. Rampen erfolgen, unter denen die Objekte 1 vorbeigefördert werden, wobei der Kopfbereich der Objekte 1 dabei jeweils eine Bördelkappe bzw. ein Verschlusselement abzieht. An die Kappenübergabeeinrichtung 24 schließt sich eine Bördeleinrichtung 25 an. In der Bördeleinrichtung 25 werden die Bördelkappen bzw. Verschlusselemente mit den Objekten 1 dicht verbunden bzw. umgebördelt, so dass die Objekte 1 nach dem Verlassen der Bördeleinrichtung 25 luftdicht verschlossen sind.

Die Funktionsweise der Vorrichtung 10 ist wie folgt: Nach der Übergabe der Objekte 1 von dem Objektträger 12 an eine Trägerplatte 17 wird diese zunächst in den Bereich der Kappenübergabeeinrichtung 24 bewegt. Hierbei findet beispielsweise eine kontinuierliche Bewegung entlang der Kappenübergabeeinrichtung 24 statt, bei der die Objekte 1 jeweils eine Bördelkappe bzw. ein Verschlusselement aus einer Rutsche abziehen und mitnehmen. Anschließend wird die Trägerplatte 17 in den Bereich der Bördeleinrichtung 25 weiterbewegt, wobei auch innerhalb der Bördeleinrichtung 25, je nach Ausbildung der Bördeleinrichtung 25, entweder eine kontinuierliche Bewegung der Trägerplatte 17 und somit der Objekte 1 entlang von Bördelrollen, oder aber eine getaktete Bewegung erfolgt, bei der die Trägerplatte 17 innerhalb der Bördeleinrichtung 25 stillsteht, damit die Bördelrollen die Bördelkappen bzw. die Verschlusselemente auf den einzelnen Objekten 1 verschließen. Anschließend, nach dem Verschließen der Objekte 1 in der Bördeleinrichtung 25, bewegt sich die Trägerplatte 17 wieder in Richtung der ursprünglichen Position, in der die Objekte 1 aus dem Objektträger 12 in die Überführeinrichtung 15 übergeben wurden. An diesem ursprünglichen Ort erfolgt nunmehr wiederum die Übergabe der verschlossenen Objekte 1 aus der Überführeinrichtung 15 in den Objektträger 12 des Handhabungsroboters 11.

Die soweit beschriebene Vorrichtung 10 kann in vielfältiger Weise abgeändert bzw. modifiziert werden, ohne vom Erfindungsgedanken abzuweichen. So kann es beispielsweise vorgesehen sein, dass die Bördeleinrichtung 25 nur eine einzige Bördelstation aufweist, was zur Folge hat, dass die einzelnen Objekte 1 taktweise dieser einzelnen Bördelstation zugeführt werden. Auch ist es denkbar, entlang des Bewegungsweges der Objekte 1 in der Vorrichtung 10 weitere bzw. andere Bearbeitungsstationen vorzusehen. So ist beispielsweise eine Vorbördeleinrichtung denkbar, bei der die Verschlusskappen an zwei gegenüberliegenden Seiten an dem Objekt 1 angedrückt werden. Auch können anstelle von zu bördelnden Verschlusselementen beispielsweise Verschlussstopfen vorgesehen sein, die durch Eindrücken in den Kopfbereich der Objekte 1 diese verschließen. Weiterhin kann es auch vorgesehen sein, auf eine Kappenübergabeeinrichtung 24 zu verzichten. In diesem Fall kann es vorgesehen sein, dass der Handhabungsroboter 11 eine der in dem Objektträger 12 entsprechende Zahl an Bördelkappen an einer anderer Station übernimmt und diese vor der Entnahme der Objekte 1 aus deren Trägerplatte auf die Kopfbereiche der Objekte 1 aufsetzt und ggf. vorbördelt.

## Patentansprüche

1. Vorrichtung (10) zum Handhaben von Objekten (1), mit einer Handhabungseinrichtung (11), die Objekte (1) aus einem Bereitstellungsraum aufnimmt und die die Objekte (1) mittels einer Überführeinrichtung (15) an wenigstens eine Bearbeitungsstation (22, 23) übergibt,
**dadurch gekennzeichnet,**
**dass** die Handhabungseinrichtung (11) jeweils eine bestimmte Anzahl Objekte mittels eines Objektträgers (12) gleichzeitig aufnimmt, dass die Überführeinrichtung (15) mehrere Trägerelemente (17) für die jeweils von der Handhabungseinrichtung (11) übernommenen mehreren Objekte (1) aufweist, dass der Bewegungsablauf jedes Trägerelements (17) an der Überführeinrichtung (15) individuell steuerbar ist und, dass die Handhabungseinrichtung (11) die jeweils mehreren Objekte (1) nach dem Durchlauf an der wenigstens einen Bearbeitungsstation (22, 23) aus dem jeweiligen Trägerelement (17) wieder entnimmt und an den Objektträger (12) übergibt.

2. Vorrichtung nach Anspruch 1,
**dadurch gekennzeichnet,**
**dass** die Überführeinrichtung (15) als Transportrad (16) ausgebildet ist, dass das Transportrad (16) mehrere, kreissegmentartige Trägerelemente (17) aufweist, die um eine Längsachse (18) des Transportrades (16) bewegbar sind und, dass die Gesamtheit der Trägerelemente (17) nur einen Teilbereich am Umfang des Transportrades (16) umfasst, so dass zwischen den einzelnen Trägerelementen (17) zumindest zeitweise Zwischenräume ausgebildet sind.

3. Vorrichtung nach Anspruch 2,
**dadurch gekennzeichnet,**
**dass** die Trägerelemente (17) kontinuierlich und taktweise bewegbar sind.

4. Vorrichtung nach Anspruch 3,
**dadurch gekennzeichnet,**
**dass** entlang des Transportwegs der Objekte (1) mehrere Bearbeitungsstationen (22, 23) angeordnet sind und, dass die Objekte (1) an den Bearbeitungsstationen (22, 23) während deren Bearbeitung je nach Art der Bearbeitungsstation (22, 23) kontinuierlich oder getaktet bewegt werden.

5. Vorrichtung nach einem der Ansprüche 1 bis 4,
**dadurch gekennzeichnet,**
**dass** die Handhabungseinrichtung als Handhabungsroboter (11) ausgebildet ist, an dem der Objektträger (12) austauschbar befestigt ist und, dass der Teilungsabstand zwischen den Objekten (1) im Objektträger (12) dem Teilungsabstand der Objekte (1) in dem Trägerelement (17) entspricht.

6. Vorrichtung nach Anspruch 5,
**dadurch gekennzeichnet,**
**dass** die Objekte (1) im Objektträger (12) in einer geraden Reihe angeordnet sind und, dass der Objektträger (12) und das Trägerelement (17) während der Übergabe der Objekte (1) an das Trägerelement (17) bzw. der Übernahme aus dem Trägerelement (17) tangential mit derselben Geschwindigkeit aneinander vorbeibewegt werden.

7. Vorrichtung nach einem der Ansprüche 1 bis 4,
**dadurch gekennzeichnet,**
**dass** die Handhabungseinrichtung als Handhabungsroboter (11) ausgebildet ist, an dem der Objektträger (12) austauschbar befestigt ist und, dass der Teilungsabstand zwischen den Objekten (1) im Objektträger (12) und der Teilungsabstand der Objekte (1) in dem Trägerelement (17) unterschiedlich ist.

8. Vorrichtung nach Anspruch 7,
**dadurch gekennzeichnet,**
**dass** die Objekte (1) im Objektträger (17) in einer geraden Reihe angeordnet sind und, dass der Objektträger (1) und das Trägerelement während der Übergabe der Objekte (1) an das Trägerelement (17) bzw. der Übernahme aus dem Trägerelement (17) tangential aneinander vorbeibewegt werden, wobei die Geschwindigkeit des Objektträgers (12) von der Geschwindigkeit des Trägerelements (17) während der Übergabe und der Übernahme zweitweise unterschiedlich ist.

9. Vorrichtung nach einem der Ansprüche 1 bis 8,
**dadurch gekennzeichnet,**
**dass** die Übergabe der Objekte (1) in das Trägerelement (17) und die Übernahme der Objekte (1) aus dem Trägerelement (17) am selben Ort der Vorrichtung (10) erfolgt.

10. Vorrichtung nach einem der Ansprüche 1 bis 9,
**dadurch gekennzeichnet,**
**dass** die Objekte (1) zwischen der Übernahme aus der Handhabungseinrichtung (11) und der Übergabe aus der Überführeinrichtung (15) stets in den Trägerelementen (17) angeordnet sind.

11. Vorrichtung nach einem der Ansprüche 1 bis 10,
**dadurch gekennzeichnet,**
**dass** die Objekte (1) mit einem pharmazeutischen Produkt befüllbare Vials oder Zylinderampullen sind und, dass die wenigstens eine Bearbeitungsstation (22, 23) zumindest eine Verschließeinrichtung (25) zum Verschließen der Objekte (1) mit einem Verschlusselement, insbesondere einer Bördelkappe umfasst.

## Claims

1. Apparatus (10) for handling objects (1), having a handling device (11), which receives objects (1) from a supply chamber and transfers the objects (1), by means of a transfer device (15), to at least one processing station (22, 23),
**characterized**
**in that** the handling device (11) receives in each case a certain number of objects at the same time by means of an object carrier (12), in that the transfer device (15) has a plurality of carrier elements (17) for the plurality of objects (1) received in each case by the handling device (11), in that the movement sequence of each carrier element (17) on the transfer device (15) can be controlled individually, and in that the plurality of objects (1) in each case, following passage through the at least one processing station (22, 23), are removed from the respective carrier element (17) again, and transferred to the object carrier (12), by means of the handling device (11).

2. Apparatus according to Claim 1,
**characterized**
**in that** the transfer device (15) is designed as a transporting wheel (16), in that the transporting wheel (16) has a plurality of circle-segment-like carrier elements (17), which can be moved about a longitudinal axis (18) of the transporting wheel (16), and in that all the carrier elements (17) together cover just a sub-region on the circumference of the transporting wheel (16), and therefore interspaces are formed, at least temporarily, between the individual carrier elements (17).

3. Apparatus according to Claim 2,
**characterized**
**in that** the carrier elements (17) can be moved continuously and cyclically.

4. Apparatus according to Claim 3,
**characterized**
**in that** a plurality of processing stations (22, 23) are arranged along the transporting path of the objects (1), and in that, depending on the type of processing station (22, 23), the objects (1) are moved continuously or cyclically as they are processed in the processing stations (22, 23).

5. Apparatus according to one of Claims 1 to 4,
**characterized**
**in that** the handling device is designed as a handling robot (11), on which the object carrier (12) is fastened in an exchangeable manner, and in that the spacing between the objects (1) in the object carrier (12) corresponds to the spacing between the objects (1) in the carrier element (17).

6. Apparatus according to Claim 5,
**characterized**
**in that** the objects (1) in the object carrier (12) are arranged in a straight row, and in that the object carrier (12) and the carrier element (17) are moved past one another tangentially at the same speed as the objects (1) are being transferred to the carrier element (17) and received from the carrier element (17).

7. Apparatus according to one of Claims 1 to 4,
**characterized**
**in that** the handling device is designed as a handling robot (11), on which the object carrier (12) is fastened in an exchangeable manner, and in that the spacing between the objects (1) in the object carrier (12) and the spacing between the objects (1) in the carrier element (17) are different.

8. Apparatus according to Claim 7,
**characterized**
**in that** the objects (1) in the object carrier (12) are arranged in a straight row, and in that the object carrier (12) and the carrier element are moved past one another tangentially as the objects (1) are being transferred to the carrier element (17) and received from the carrier element (17), wherein the speed of the object carrier (12) is temporarily different from the speed of the carrier element (17) during the transfer and the receiving operations.

9. Apparatus according to one of Claims 1 to 8,
**characterized**
**in that** the operation of transferring the objects (1) into the carrier element (17) and that of receiving the objects (1) from the carrier element (17) take place at the same location of the apparatus (10).

10. Apparatus according to one of Claims 1 to 9,
**characterized**
**in that** the objects (1) are always arranged in the carrier elements (17) between the operation of being received from the handling device (11) and that of being transferred from the transfer device (15).

11. Apparatus according to one of Claims 1 to 10,
**characterized**
**in that** the objects (1) are cylinder ampoules or vials which can be filled with a pharmaceutical product, and in that the at least one processing station (22, 23) comprises at least one closing device (25) for closing the objects (1) with a closure element, in particular a flanged cap.

## Revendications

1. Dispositif (10) pour manipuler des objets (1), comprenant un système de manipulation (11) qui reçoit des objets (1) provenant d'un espace de fourniture et qui transfère les objets (1) au moyen d'un système de transfert (15) à au moins un poste de traitement (22, 23),
**caractérisé en ce que**
le système de manipulation (11) reçoit à chaque fois simultanément un nombre déterminé d'objets au moyen d'un support d'objets (12), **en ce que** le système de transfert (15) présente plusieurs éléments de support (17) pour la pluralité d'objets respectifs (1) reçus par le système de manipulation (11), **en ce que** le déroulement du mouvement de chaque élément de support (17) sur le système de transfert (15) peut être commandé individuellement et **en ce que** le système de manipulation (11) enlève à nouveau la pluralité d'objets respectifs (1) de l'élément de support respectif (17) après leur passage au niveau de l'au moins un poste de traitement (22, 23), et les transfère au support d'objets (12).

2. Dispositif selon la revendication 1,
**caractérisé en ce que**
le dispositif de transfert (15) est réalisé sous forme de roue de transport (16), **en ce que** la roue de transport (16) présente plusieurs éléments de support (17) en forme de segment de cercle, qui peuvent être déplacés autour d'un axe longitudinal (18) de la roue de transport (16), **en ce que** la totalité des éléments de support (17) ne constitue qu'une région partielle sur la périphérie de la roue de transport (16) de telle sorte qu'entre les éléments de support individuels (17) soient réalisés au moins temporairement des espaces intermédiaires.

3. Dispositif selon la revendication 2,
**caractérisé en ce que**
les éléments de support (17) peuvent être déplacés en continu et de manière cadencée.

4. Dispositif selon la revendication 3,
**caractérisé en ce que**
plusieurs postes de traitement (22, 23) sont disposés le long de la voie de transport des objets (1), et **en ce que** les objets (1) sont déplacés en continu ou en cadence en fonction du poste de traitement (22, 23) au niveau des postes de traitement (22, 23) pendant leur traitement.

5. Dispositif selon l'une quelconque des revendications 1 à 4,
**caractérisé en ce que**
le système de manipulation est réalisé sous forme de robot de manipulation (11) sur lequel est fixé de manière interchangeable le support d'objets (12), et **en ce que** la distance d'intervalle entre les objets (1) dans le support d'objets (12) correspond à la distance d'intervalle des objets (1) dans l'élément de support (17).

6. Dispositif selon la revendication 5,
**caractérisé en ce que**
les objets (1) sont disposés dans le support d'objets (12) en ligne droite, **en ce que** le support d'objets (12) et l'élément de support (17) pendant le transfert des objets (1) sur l'élément de support (17) ou pendant la reprise depuis l'élément de support (17) passent tangentiellement à la même vitesse l'un devant l'autre.

7. Dispositif selon l'une quelconque des revendications 1 à 4,
**caractérisé en ce que**
le système de manipulation est réalisé sous forme de robot de manipulation (11) sur lequel est fixé de manière interchangeable le support d'objets (12) et **en ce que** la distance d'intervalle entre les objets (1) dans le support d'objets (12) est différente de la distance d'intervalle des objets (1) dans l'élément de support (17).

8. Dispositif selon la revendication 7,
**caractérisé en ce que**
les objets (1) dans le support d'objets (12) sont disposés en ligne droite et **en ce que** le support d'objets (12) et l'élément de support passent l'un devant l'autre tangentiellement pendant le transfert des objets (1) sur l'élément de support (17) ou pendant la reprise depuis l'élément de support (17), la vitesse du support d'objets (12) étant différente dans le temps de la vitesse de l'élément de support (17) pendant le transfert et la reprise.

9. Dispositif selon l'une quelconque des revendications 1 à 8,
**caractérisé en ce que**
le transfert des objets (1) dans l'élément de support (17) et la reprise des objets (1) depuis l'élément de support (17) ont lieu au même endroit du dispositif (10).

10. Dispositif selon l'une quelconque des revendications 1 à 9,
**caractérisé en ce que**
les objets (1) sont toujours disposés dans les éléments de support (17) entre la reprise depuis le dispositif de manipulation (11) et le transfert depuis le système de transfert (15).

11. Dispositif selon l'une quelconque des revendications 1 à 10,
**caractérisé en ce que**
les objets (1) sont des flacons ou des ampoules cylindriques pouvant être remplis d'un produit pharmaceutique, et **en ce que** l'au moins un poste de traitement (22, 23) comprend au moins un système de fermeture (25) pour fermer les objets (1) avec un élément de fermeture, notamment un capuchon à bords.
